## Europäisches Patentamt

## European Patent Office

## Office européen des brevets

(19)

(11) Veröffentlichungsnummer: **0 078 456**
B1

(12) **EUROPÄISCHE PATENTSCHRIFT**

(45) Veröffentlichungstag der Patentschrift:
10.07.85

(51) Int. Cl.⁴: **C 08 F 36/18,** C 08 L 11/00 //
(C08L11/00, 11:00)

(21) Anmeldenummer: **82109712.8**

(22) Anmeldetag: **21.10.82**

(54) Herstellung schwefelmodifizierter Chloroprenfestkautschuke.

(30) Priorität: **03.11.81 DE 3143524**

(43) Veröffentlichungstag der Anmeldung:
**11.05.83 Patentblatt 83/19**

(45) Bekanntmachung des Hinweises auf die Patenterteilung:
**10.07.85 Patentblatt 85/28**

(84) Benannte Vertragsstaaten:
**DE FR GB**

(56) Entgegenhaltungen:
**DE - A - 1 807 298**
**US - A - 2 877 200**

(73) Patentinhaber: **BAYER AG, Konzernverwaltung RP Patentabteilung, D-5090 Leverkusen 1 Bayerwerk (DE)**

(72) Erfinder: **Musch, Rüdiger, Dr., Altenberger-Dom-Strasse 169, D-5060 Bergisch-Gladbach 2 (DE)**
Erfinder: **Göbel, Wilhelm, Dr., Max-Beckmann-Strasse 37, D-5090 Leverkusen 1 (DE)**
Erfinder: **Müller, Eberhard, Dr., Moltkestrasse 9, D-4047 Dormagen (DE)**
Erfinder: **Konter, Wolfgang, Dr., Espenstrasse 49, D-4040 Neuss 21 (DE)**

**Beschreibung**

Die Erfindung betrifft ein Verfahren zur Herstellung eines vulkanisierbaren elastomeren Choropren-Schwefelcopolymerisates mit Viskositäten von 60 bis 35 ME, Festigkeiten > 20 MPa und Schwefelgehalten von etwa 0,5 bis 0,7 Gew.-% im Ansatz.

Schwefelmodifizierter Polychloprenkautschuk besitzt viele wertvolle anwendungstechnische Eigenschaften und hat deshalb eine breite Anwendung gefunden. Eine gute Mastizierbarkeit und das Vulkanisationsvermögen ohne den Zusatz von Thioharnstoff-Beschleunigern müssen dabei besonders vorteilhaft bewertet werden. Das Polymere eignet sich aufgrund seiner hohen dynamischen Belastbarkeit bevorzugt für Artikel wie Keilriemen und Luftfederbälge.

Bei den S-modifizierten Chloprenpolymeren haben Menge und Art des S-Einbaues einen großen Einfluß auf die Eigenschaften. Ist der Schwefelgehalt des Polymeren zu gering, so erhält man zwar eine hohe Festigkeit, aber man kann das Produkt nicht mehr durch Peptisation in ein für die Verarbeitung günstiges Viskositätsniveau abbauen. Ist der Schwefelgehalt zu hoch, erhält man ein viskositätsinstabiles Produkt mit ungenügenden Vulkanisateigenschaften. Bei einem mittleren Schwefelgehalt von etwa 0,5 bis 0,7 Gew.-% im Ansatz bezogen auf Chloropren erhält man etwa den gewünschten Viskositätsbereich, nicht jedoch die gewünschte Festigkeit. Die Schwefelgehalte beziehen sich jeweils, wie angegeben, auf den Schwefelgehalt im Ansatz, da keine genügend genauen Analysenmethoden zur Verfügung stehen, um die Menge des eingebauten Schwefels mit geringer Fehlergrenze zu bestimmen.

Aufgabe der vorliegenden Erfindung ist es, ein Verfahren bereitzustellen, mit dem S-modifizierte vulkanisierbare Polychloprenfestkautschuke erhalten werden, die bei Schwefelgehalten von etwa 0,5 bis 0,7 Gew.-% im Ansatz nach der Peptisation Viskositäten von 60 bis 35 ME und nach der Vulkanisation Festigkeiten > 20 MPa aufweisen.

Die Aufgabe wird erfindungsgemäß dadurch gelöst, daß man Chloropren in wäßriger Emulsion in Gegenwart von 0,1 bis 0,45 Gew.-% Schwefel zu einem Latex I polymerisiert, Chloropren in wäßriger Emulsion in Gegenwart von 0,5 bis 1,2 Gew.-% Schwefel zu einem Latex II polymerisiert, die Latices I und II, gegebenenfalls zusammen mit weiteren schwefelmodifizierten Polychloprenlatices im Verhältnis 4 : 1 bis 1 : 4 (bezogen jeweils auf Feststoff) umsetzt, die Mischung in üblicher Weise peptisiert und zum Festkautschuk aufarbeitet, wobei sich die Prozentangaben auf die Monomermenge beziehen. Peptisierung und Aufarbeitung können beispielsweise nach DE-OS 1 807 298 erfolgen.

Nach dem erfindungsgemäßen Verfahren werden schwefelmodifizierte Polychloprenkautschuke mit mittleren Schwefelgehalten von etwa 0,5 bis 0,7 Gew.-% Schwefel im Ansatz erhalten. Setzt man in analoger Weise Chloropren mit dieser Menge Schwefel in einstufiger Reaktion um, so erhält man zwar ebenfalls Kautschuke des gewünschten Viskositätsbereiches, jedoch werden nach der Vulkanisation nur Festigkeiten unter 20 MPa erreicht.

Eine getrennte Peptisierung der Latices I und II, nachträgliche Vermischung und gemeinsame Aufarbeitung ergibt aufgrund eines stärkeren Viskositätsabbaues Kautschuke mit schlechterem Rohmaterial und Vulkanisateigenschaften, z. B. mit geringerer Lagerstabilität und niedrigeren Festigkeiten.

Auch das nachträgliche Mischen der festen Polymerisate z. B. auf der Walze ist für die Herstellung einer Vulkanisatmischung ungünstig, denn durch die doppelte Beanspruchung des Materials auf der Walze bei der Mischungsherstellung und beim Einarbeiten der Zuschlagstoffe für die Vulkanisation kommt es zu einem vorzeitigen unerwünschten Wiederanstieg der Mischungsviskosität.

Unter Chloropren-Polymerisaten werden in der vorliegenden Erfindung solche verstanden, bei denen bis zu 10 Gew.-% des Chloprens durch andere copolymerisierbare Monomere wie 2,3-Dichlorbutadien, 1-Chlorbutadien, Butadien, Isopren, Acrylsäure, Methacrylsäure, Acrylnitril oder Methacrylnitril ersetzt sind.

Vorzugsweise sind bis 5 Gew.-% durch 2,3-Dichlorbutadien ersetzt.

Die Molekulargewichtseinstellung der schwefel-modifizierten Polymeren wird im allgemeinen nicht durch während der Polymerisation zugesetzte Regler, sondern durch einen der Polymerisation nachgeschalteten sogenannten Peptisationsschritt erreicht. Unter Peptisation wird hier die Spaltung der Polymerkette an ihren Schwefelsegmenten verstanden. Dieser Schritt ist notwendig, da sich der Kautschuk nur in bestimmten Viskositätsbereichen optimal verarbeiten läßt. Das häufig eingesetzte Peptisationsagens Tetraethylthiuramdisulfid (TETD) kann dabei mit nukleophil wirkenden Substanzen, wie Aminen oder Dithiocarbamat, kombiniert werden (DE-OS 2 018 736, DE-AS 1 230 204). Der nach der Polymerisation erhaltene Latex wird üblicherweise bei 30—70° C peptisiert. Die Geschwindigkeit der Peptisation hängt unter anderem von der Menge des Peptisationsagens, von Art und Menge des Nukleophils, von der Temperatur und dem pH-Wert des Latex ab. Der Polymerabbau läßt sich im Latex oder am festen Rohpolymerisat, z. B. nach Gefrierkoagulation des Latex, durchführen.

Lagert man das feste Polymerisat bei Raumtemperatur, so sinkt die Mooney-Viskosität langsam weiter ab, durchläuft ein Minimum und steigt anschließend wieder an. Bei zu weitgehender Peptisation in der Latexphase steigt die Mooney-Viskosität des Polymerisats, insbesondere bei späterer staärkerer thermischer Belastung des Kautschuks, sofort an. Dieser Effekt ist nicht erwünscht und kann durch Nachsatz von TETD unmittelbar vor der Aufarbeitung des Latex zum Festkautschuk weitgehend verhindert werden.

Es zeigt sich nun, daß die erfindungsgemäß hergestellten Produkte nach der Aufarbeitung schon bei wesentlich geringeren TETD-Nachsätzen ein ausgezeichnetes Lagerungsverhalten zeigen, als dies bei Chloropren-Schwefel-Copolymerisation mit vergleichbarem Schwefelgehalt der Fall ist.

### Beispiel 1

### Herstellung der Polymerlatices

970 g Chloropren und 30 g 2,3-Dichlorbutadien werden in 1500 g Wasser, dem 55 g disproportionierte Harzsäure (Feststoffgehalt 70%), 5 g Natriumsalz eines Naphthalinsulfonsäure-Formaldehyd-Kondensationsproduktes, 5 g Natriumhydroxid, 3 g wasserfreies Natriumpyrophosphat, 5 g Triisopropanolamin und 4 bis 20 g Schwefeldispersion (50%ig) zugesetzt sind, emulgiert.

Als Katalysatorlösung werden 10 g Kaliumpersulfat und 0,2 g Natrium-$\beta$-Anthrachinonsulfonat gelöst in 490 g Wasser vorbereitet.

Die Emulsion wird mit Stickstoff gespült, auf 50°C erwärmt und durch Zugabe von Katalysatorlösung gestartet. Während der Polymerisation wird weiter Katalysatorlösung so eindosiert, daß die Temperatur des Ansatzes 50°C nicht übersteigt. Nach einem Monomerumsatz von 65% wird mit 1 g Phenothiazin abgestoppt und das überschüssige Monomere bei vermindertem Druck durch Wasserdampfdestillation abgetrennt. Man erhält einen Latex mit einer Feststoffkonzentration von 26,5—27,0 Gew.-%. Die Latices A—H enthalten folgende Schwefelmengen im Ansatz:

| | Latex | | | | | | | |
| | A | B | C | D | E | F | G | H |
|---|---|---|---|---|---|---|---|---|
| Schwefeldispersion (50%ig) | 4 | 7 | 8 | 9 | 10 | 12 | 14 | 20 (g) |

### Beispiele 2 bis 10

Je 40 kg der Latices und Latexmischungen werden mit 115 g TETD versetzt und bei 40°C peptisiert. Anschließend wird der pH mit Essigsäure auf einen Wert <7 eingestellt, das Polymerisat nach Zusatz von weiteren 145 g TETD durch Gefrierkoagulation gefällt und getrocknet.

Die Schwefelgehalte und Mooney-Viskositäten sind in der folgenden Tabelle angegeben, wobei die Beispiele 2 bis 5 Vegleichsbeispiele sind.

| Beispiel | Gew.-% der Latices in der Mischung | | | | | | | | Gew.-% Schwefel bezogen auf Monomermenge | Mooney-Viskosität (ME) |
| | A | B | C | D | E | F | G | H | | |
|---|---|---|---|---|---|---|---|---|---|---|
| 2 | — | — | 100 | — | — | — | — | — | 0,4 | 102 |
| 3 | — | — | — | — | 100 | — | — | — | 0,5 | 56 |
| 4 | — | — | — | — | — | 100 | — | — | 0,6 | 55 |
| 5 | — | — | — | — | — | — | 100 | — | 0,7 | 50 |
| 6 | — | — | — | 33 | — | — | 33 | 33 | 0,72 | 50 |
| 7 | — | 33 | — | — | — | 33 | — | 33 | 0,66 | 54 |
| 8 | 25 | — | — | — | — | 75 | — | — | 0,5 | 53 |
| 9 | — | 75 | — | — | — | — | — | 25 | 0,51 | 54 |
| 10 | 20 | — | — | — | — | — | 80 | — | 0,6 | 56 |

3

## 0 078 456

Beispiele 11 bis 14

Lagerstabilität

3,7 kg der Latices der Beispiele 5 und 6 werden mit den nachfolgenden Mengen TETD peptisiert und aufgearbeitet. TETD wird zur Lagerstabilität nachgesetzt.

Erwünscht ist, daß sich die Mooneyviskosität des Polymeren nach einer Lagerung bei 70°C nicht ändert oder lediglich absinkt. Dieser Effekt wird bei den Vergleichsbeispielen 11 bis 13 erst bei einem deutlich höheren Gehalt an TETD erzielt.

| | Beispiel | | | |
| | 11 | 12 | 13 | 14 |
| | Latex aus Beispiel | | | |
| | 5 | 5 | 5 | 6 |
|---|---|---|---|---|
| Peptisation mit TETD (g) | 7 | 7 | 7 | 7 |
| TETD-Nachsatz (g) | 18 | 10 | 6 | 6 |
| ML-4 (sofort) (ME) | 45 | 50 | 53 | 50 |
| ML-4 (70°C, 1 Tag) (ME) | 37 | 54 | 63 | 48 |

Beispiele 15 bis 18

Walzfellbildungszeit

Auf einem Walzwerk von 200 mm Durchmesser und 390 mm Arbeitsbreite mit einer Friktion von 1 : 1,113 wird bei einer Walzendrehzahl von 7 min$^{-1}$ für die langsamere Walze, einem Walzenspalt von 3 mm, einer Anfangstemperatur der Walze von 35 bis 40°C und einem Einsatz von 1500 g Kautschuk die Zeit bestimmt, in der sich ein geschlossenes Fell gebildet hat. Die Beispiele 15 und 17 sind Vergleichsbeispiele.

| Beispiel | Polychloropren nach Beispiel | Walzfellbildungszeit (min) |
|---|---|---|
| 15 | 5 | 2,5 |
| 16 | 6 | 1,0 |
| 17 | 3 | 4,5 |
| 18 | 9 | 1,5 |

Beispiele 19 bis 21

Vulkanisationsgeschwindigkeit

Eine Rußmischung der Polymeren, gemäß ISO 2475 hergestellt, wird bei 150°C vulkanisiert. Man bestimmt die Zeit, in der 10% und 90% der Vulkanisation abgelaufen sind. Aus wirtschaftlicher und anwendungstechnischer Sicht ist eine kurze Reaktionszeit ($t_R = t_{90} - t_{10}$) erwünscht. Die Beispiele 19 und 20 sind Vergleichsbeispiele.

| | Beispiel | | |
| | 19 | 20 | 21 |
|---|---|---|---|
| Polymer aus Beispiel | 4 | 5 | 6 |
| $t_R$ (min) | 21,5 | 17,7 | 8,6 |

4

**0 078 456**

Beispiele 22 bis 25

Vulkanisatfestigkeit

Man vulkanisiert gemäß Beispiel 19 in 3 Stufen (20, 40, 60 min) und bestimmt die Festigkeit der entsprechenden Proben nach DIN 53 455. Es wird jeweils der Mittelwert der 3 Stufen angegeben. Die Beispiele 22 und 24 sind Vergleichsbeispiele.

|  | Beispiel | | | |
|  | 22 | 23 | 24 | 25 |
| --- | --- | --- | --- | --- |
| Polymer aus Beispiel | 4 | 10 | 3 | 8 |
| Festigkeit (MPa) | 18,2 | 20,4 | 19,4 | 21,6 |

## Patentansprüche

1. Verfahren zur Herstellung von schwefelmodifizierten, vulkanisierbaren Chloroprenfestkautschuken mit Viskositäten von 60 ME bis 35 ME mit Schwefelgehalten von etwa 0,5 bis 0,7 Gew.-% im Gesamtansatz, dadurch gekennzeichnet, daß man Chloropren in Gegenwart von 0,1 bis 0,45 Gew.-% Schwefel zu einem Latex I polymerisiert, Chloropren in Gegenwart von 0,5 bis 1,2 Gew.-% Schwefel zu einem Latex II polymerisiert, die Latices I und II, gegebenenfalls zusammen mit weiteren schwefelmodifizierten Polychloroprenlatices im Verhältnis 4 : 1 bis 1 : 4 (bezogen jeweils auf Feststoff) mischt, die Mischung peptisiert und zum Festkautschuk aufarbeitet, wobei sich die Prozentangaben auf die Monomermenge beziehen.

2. Verfahren nach Anspruch 1, dadurch gekennzeichnet, daß bis zu 10 Gew.-% des Chloroprens durch andere copolymerisierbare Monomere ersetzt sind.

3. Verfahren nach Anspruch 1, dadurch gekennzeichnet, daß bis zu 5 Gew.-% des Chloroprens durch 2,3-Dichlorbutadien ersetzt sind.

## Claims

1. Process for the production of sulphur-modified, vulcanisable solid chloroprene rubbers having viscosities of 60 MU to 35 MU and sulphur contents of about 0.5 to 0.7% by weight in the total batch, characterised in that chloroprene is polymerised in the presence of 0.1 to 0.45% by weight of sulphur to form a latex I, chloroprene is polymerised in the presence of 0.5 to 1.2% by weight of sulphur to form a latex II, the latices I and II are mixed, optionally together with further sulphur-modified polychloroprene latices, in a ratio of 4 : 1 to 1 : 4 (based in each case on solids), the mixture is peptised and worked up to form the solid rubber, the percentages mentioned relating to the quantity of monomer.

2. Process according to Claim 1, characterised in that up to 10% by weight of the chloroprene is replaced by other copolymerisable monomers.

3. Process according to Claim 1, characterised in that up to 5% by weight of the chloroprene is replaced by 2,3-dichlorobutadiene.

## Revendications

1. Procédé de préparation de caoutchoucs solides de chloroprène, vulcanisables, modifiés du soufre, présentant des viscosités de 60 ME à 35 ME avec des teneurs en soufre d'environ 0,5 à 0,7% en poids dans la charge totale, procédé caractérisé en ce qu'on polymérise du chloroprène en présence de 0,1 à 0,45% en poids de soufre pour obtenir un latex I, on polymérise du chloroprène en présence de 0,5 à 1,2% en poids de soufre pour obtenir un latex II, on mélange les latex I et II, éventuellement avec un supplément de latex de polychloroprène modifié par du soufre, selon un rapport de 4 : 1 à 1 : 4 (rapporté à chaque fois à la substance solide), on peptise le mélange et l'on soumet le caoutchouc solide à un traitement d'élaboration, les données en pourcentage se rapportant à la quantité de monomère(s).

2. Procédé selon la revendication 1, caractérisé en ce qu'on remplace jusqu'à un maximum de 10% en poids du chloroprène par d'autres monomères copolymérisables.

3. Procédé selon la revendication 1, caractérisé en ce qu'on remplace jusqu'à un maximum de 5% en poids du chloroprène par du 2,3-dichlorobutadiène.